# EUROPÄISCHE PATENTANMELDUNG

(11) **EP 3 385 891 A1**
(43) Veröffentlichungstag der Anmeldung: **10.10.2018**
(21) Anmeldenummer: 18165626.5
(22) Anmeldetag: 04.04.2018
(51) Int. Cl.: G06Q 10/00

(54) **DATENBANKMANAGEMENTSYSTEM UND VERFAHREN ZUM DATENBANKMANAGEMENT**

(30) Priorität: 05.04.2017 DE 102017107339
(71) Anmelder: Pränger, Thomas, 83607 Holzkirchen (DE)
(72) Erfinder: Pränger, Thomas, 83607 Holzkirchen (DE)
(74) Vertreter: Beckord & Niedlich Patentanwälte PartG mbB

(57) **Zusammenfassung**

Die Erfindung betrifft ein Datenbankmanagementsystem (DBMS) und ein Verfahren zum Management einer Datenmenge umfassend P- und B-Datenobjekte, und optional auch S- und/oder Z-Datenobjekte, wobei das DBMS bzw. das Verfahren so ausgestaltet ist, dass jedem B-Datenobjekt oder Z-Datenobjekt, das von mehr als einem P-Datenobjekt und/oder S-Datenobjekt und/oder Z-Datenobjekt benutzt wird bzw. jeder Gruppe von B-Datenobjekten oder Z-Datenobjekten, die sich auf dasselbe Objekt beziehen, und von mehr als einem P-Datenobjekt und/oder S-Datenobjekt und/oder Z-Datenobjekt benutzt wird, ein S-Datenobjekt erstellt wird, welches für das betreffende übergeordnete P- oder S-Datenobjekt relevante Informationen der gemeinschaftlich genutzten Datenobjekte enthält, und wobei das DBMS bzw. das Verfahren zusätzlich so ausgestaltet ist, dass es einen Ausgabe-Datensatz erstellt, in dem S-Datenobjekte als einzige Datenobjekte Informationen zu auf die sie zugreifenden Datenobjekte aufweisen, und keine andere Kategorie von Datenobjekten diese Zuordnung von weiteren übergeordneten Datenobjekten aufweist.

## Beschreibung

Die Erfindung betrifft ein Datenbankmanagementsystem und Verfahren zum Datenbankmanagement.

Der Kunde und Nutzer bezieht Dienstleistungen in Form von definierten IT Services. Hierzu ist die gängige Ansicht, dass zu dieser Organisation die Strukturierung der IT Infrastruktur und ihre dazugehörigen Applikationen und Datenbanken in "Business Services" und unterstützende technische Services dargestellt wird.

Ein Nachteil des Standes der Technik ist, dass bisher keine Lösung existiert, die erreicht, dass eine klare Strukturierung vorliegt, und die Daten bei komplexen Zusammenhängen bisher nicht durchgängig und mit wenig Rechenaufwand bearbeitet werden können.

Aufgabe der vorliegenden Erfindung war es, die Nachteile des Standes der Technik zu überwinden und ein Datenbankmanagementsystem und ein Verfahren zum Datenbankmanagement zur Verfügung zu stellen, welches eine einfache und klare Strukturierung von Daten ermöglicht, und einen schnellen Zugriff auf gewünschte Informationsstrukturen erlaubt.

Diese Aufgabe wird mit einem Datenbankmanagementsystem und einem Verfahren zum Datenbankmanagement gemäß den Ansprüchen gelöst.

Das Datenbankmanagementsystem (DBMS) gemäß der vorliegenden Erfindung ist besonders gut zum Management von Daten geeignet, welche den Wert und die Kosten von IT-Produkten, IT-Projekten oder IT-Business Services in einem Betrieb widerspiegeln. Eine besondere Aufgabe ist es, die Kosten von miteinander vernetzten Objekten und Arbeiten der IT-Branche (z. B. Business Services, Applikationen, Hardware, Beratung und Personal) bestimmten Projekten oder Produkten zuzuordnen, selbst wenn diese Objekte nur teilweise für die betreffenden Projekte/Produkte verwendet worden sind oder auch für mehrere Produkte/Projekte verwendet werden.

Auch wenn diese Erfindung ebenfalls für Daten anderer Vorgänge ein vorteilhaftes Management ermöglicht, wird zum besseren Verständnis eine Nomenklatur in Anlehnung an die IT-Branche verwendet, die jedoch nicht die allgemeine Verwendbarkeit einschränken soll, sofern dies nicht in der Beschreibung eindeutig anders kenntlich gemacht werden sollte.

Als Datenbankmanagementsystem (DBMS) wird grundsätzlich ein System angesehen, welches zum Bearbeiten von Daten einer Datenbank oder in einem anderen Speicher ausgelegt ist. Der Begriff "Datenbankmanagementsystem" betrifft nicht zwingend ein bestimmtes Datenbankformat und ist nicht zwingend auf eine bestimmte Datenbankfunktion eingeschränkt. Ein Datenbankmanagementsystem ist ein Hard- oder Softwaresystem, insbesondere eine Software, die es Benutzern ermöglicht, den Zugang zu einer Datenbank zu eröffnen, zu definieren, aufrechtzuerhalten und zu kontrollieren. Die Funktionen eines DBMS erstrecken sich dabei insbesondere auf das Auffinden, Ordnen und Ausgeben von Daten einer Datenbank und bevorzugt auch das Eingeben und Einordnen von Daten in eine Datenbank. Als DBMS gemäß dieser Erfindung werden auch Hard- oder Softwaresysteme angesehen, die mit fest vorgegebenen Datenbankmanagementsystemen vorbestimmter Datenbanksysteme kommunizieren können und sich dieser zum Zweck des Datenmanagements bedienen können. Beispielsweise ist es bei SAP- oder Oracle-Datenbanksystemen vorgesehen, dass der Zugriff über die entsprechenden SAP- bzw. Oracle-Datenbankmanagementsysteme erfolgt. Das erfindungsgemäße DBMS kann diesbezüglich also auch dazu ausgestaltet sein, dass ein Zugriff nicht direkt auf die Daten erfolgt sondern über diese vorgesehenen "intrinsischen" Datenmanagementsysteme.

Als "Management" im Sinne der Erfindung wird ein Verfahren angesehen, welches Daten einem Benutzer in einer klar definierten Art und Weise zur Verfügung stellt, sowie ein Verfahren, welches Daten der oder in der Datenbank organisiert, z. B. durch Bearbeiten der Daten, Verschieben der Daten, Kopieren der Daten oder Erstellen neuer Daten. Zudem wird als "Management" auch ein Verfahren angesehen, mittels dessen eine neue Datenbank mit einer klar definierten Datenstruktur erstellt wird.

Ein Ziel für eine einfache und klare Strukturierung von Daten ist, Daten der Datenbank in einem hierarchischen System zu ordnen. Diese hierarchische Ordnung kann dabei in einem Ausgabe-Datensatz für den Benutzer vorliegen, sie kann aber alternativ oder ergänzend auch bezüglich der Strukturierung der Daten direkt im Speicherbereich der Datenbank vorliegen.

Bezüglich der Hierarchie bedeutet "unten" derjenige Bereich, in dem Elemente zu finden sind, welche die Hauptarbeit verrichten (z. B. Hardware, Software oder Applikationen, welche Berechnungen durchführen, mit der Hardware kommunizieren oder Daten auswerten) und "oben" der Bereich, in dem auf die Elemente weiter unten zugegriffen wird und deren Ergebnisse verarbeitet werden.

Im Folgenden werden zur Kennzeichnung von Datenobjekten bezüglich ihrer Funktion oder Position in der Hierarchie die folgenden Notationen verwendet:
Das hierarchische System kann als in zwei bzw. in drei Bereiche unterteilt angesehen werden, die ggf. miteinander überlappen können.

Unten findet sich der "Basisbereich". Dieser umfasst Daten zu "Basiselementen" wie z. B. Applikationen, Hardware und Personal. Diese Daten werden auch als "B-Datenobjekte" bezeichnet. Auf den Systemen, welche die B-Datenobjekte beschreiben, baut die Hierarchie auf. Die Basiselemente sind dabei diejenigen Strukturen (z. B. Hard- oder Software), welche die eigentliche Arbeit ausführen. Als "eigentliche Arbeit" oder "Hauptarbeit" wird jegliche Arbeit bzw. "Erfüllung von Aufgaben", z. B. im Sinne von Rechenarbeit, Bereitstellung von Rechenkapazität oder von Ressourcen verstanden.

Bevorzugt umfassen im IT-Bereich die Basiselemente Applikationen, Basisprogramme, Treiber, Lizenzen, Software, Hardware, Infrastruktur, bzw. die B-Datenobjekte umfassen Daten zu diesen Basiselementen.

Oben findet sich der "Produktbereich". Dieser umfasst Daten zu Produkten oder Projekten, welche sich der Basiselemente bedienen, und deren Arbeiten koordinieren und Benutzern ein Ergebnis aus diesen Arbeiten zur Verfügung stellen. Diese Daten werden auch als "P-Datenobjekte" bezeichnet.

Im IT-Bereich bezeichnet ein Produkt insbesondere eine IT-Dienstleistung bzw. einen IT-Business Service.

Zwischen "Oben" und "Unten" findet sich bevorzugt der "Aggregationsbereich" oder "Zusammenfassungsbereich". Dieser umfasst Daten zu Gruppen von Basiselementen, die sich aufgrund ihrer Aufgaben und Natur sinnvoll zusammenfassen lassen. Diese Daten werden, da sie zusammengefasste Informationen enthalten, im Folgenden auch als "Z-Datenobjekte" bezeichnet.

Auch wenn es vorteilhaft sein kann, ist es nicht zwangsläufig notwendig, dass nur technisch oder physikalisch zusammenhängende B-Datenobjekte oder Z-Datenobjekte von einem weiteren Z-Datenobjekt zusammengefasst werden.

Die Erfindung nutzt noch eine weitere Hierarchie, die nahezu identisch mit der oben beschriebenen ist, die als "Produkthierarchie" bezeichnet werden kann. Dies ist die "Servicehierarchie", welche eine entsprechende Struktur wie die Produkthierarchie aufweist und sich lediglich darin von der Produkthierarchie unterscheidet, dass die "P-Datenobjekte" dort als "S-Datenobjekte" bezeichnet werden und sich nicht auf Produktelemente beziehen, sondern auf Serviceelemente, die von Produktelementen, oder anderen Serviceelementen, genutzt werden können.

Ein S-Datenelement bezeichnet insbesondere einen technischen Service, der ein Produkt oder einen weiteren technischen Service unterstützt. S-Datenelemente nutzen Z-Datenelemente und/oder B-Datenelemente und ggf. weitere S-Datenelemente.

Eine Verbindung zwischen den Datenobjekten bezüglich der Hierarchie, was einer Zuordnung bevorzugt nach unten entspricht, wobei jedoch grundsätzlich zunächst auch horizontale Zuordnungen oder Zuordnungen von unten nach oben möglich sind, wird im Folgenden auch der Übersicht halber als "Nutzung" bezeichnet, da eine Verbindung in der Datenstruktur eine Nutzung von Diensten oder Ressourcen in der realen Welt abbildet.

Ein übergeordnetes Datenobjekt wird in einer für Datenbanken üblichen Art auch als "Parent" oder "Elternteil" bezeichnet. Diesem Datenobjekt untergeordnete bzw. von diesem Datenobjekt "genutzte" Datenobjekte werden in diesem Zuge entsprechend als "Children" oder "Kinder" bezeichnet. Jedem "Child" können ein oder mehrere weitere "Children" untergeordnet sein. Jedoch können bestimmte Datenobjekte auch keine Children aufweisen.

Das erfindungsgemäße Datenbankmanagementsystem (DBMS) ist so ausgestaltet, dass für ein Datenobjekt, welches von mehr als einem anderen Datenobjekt im Sinne der Erfindung genutzt wird, ein S-Datenobjekt erstellt wird. So wird also für ein B-Datenobjekt oder Z-Datenobjekt, das von mehr als einem P-Datenobjekt und/oder S-Datenobjekt und/oder Z-Datenobjekt benutzt wird bzw. für eine Gruppe von B-Datenobjekten oder Z-Datenobjekten, die sich auf dasselbe Objekt bezieht, und von mehr als einem P-Datenobjekt und/oder S-Datenobjekt und/oder Z-Datenobjekt benutzt wird, ein S-Datenobjekt erstellt, welches für das betreffende übergeordnete P- oder S-Datenobjekt (Parent) relevante Informationen der gemeinschaftlich genutzten Datenobjekte enthält.

Insbesondere ist das DBMS zusätzlich dazu ausgelegt, ggf. erst nach einer entsprechenden Anweisung durch den Benutzer, eine Einordnung des betreffenden S-Datenobjekts in eine neue (weitere) Hierarchie ("Servicehierarchie") vorzunehmen, und insbesondere eine Zuordnung der von diesem S-Datenobjekt genutzten Datenobjekte als Z-Datenobjekte oder B-Datenobjekte in dieser neuen (weiteren) Servicehierarchie durchzuführen. Es kann somit ein S-Datenobjekt stellvertretend für eine Unterhierarchie ausgegeben werden oder aber die Unterhierarchie zusätzlich oder separat ausgegeben werden.

Zusätzlich ist das erfindungsgemäße DBMS so ausgestaltet, dass es einen Ausgabe-Datensatz erstellt, in dem S-Datenobjekte als einzige Datenobjekte Informationen zu auf die sie zugreifenden Datenobjekte (Parents) aufweisen, und keine andere Kategorie von Datenobjekten diese Zuordnung von weiteren übergeordneten Datenobjekten (Patents) aufweist. Bevorzugt umfassen in einem Ausgabe-Datensatz untergeordnete S-Datenobjekte keinerlei Informationen zu weiteren untergeordneten Datenobjekten. Anders formuliert umfasst ein als Child eingeordnetes S-Datenobjekt in einem Ausgabe-Datensatz keine weiteren Children.

Der Ausgabe-Datensatz kann im Grunde alle möglichen Formate aufweisen. Insbesondere ist der Ausgabe-Datensatz eine Datei, welche ein Browser lesen kann, oder eine Datenstruktur, die einer Datenbank zugeordnet werden kann. Es können auch zwei oder mehrere Ausgabe-Datensätze mit unterschiedlichen Datenformaten erzeugt werden.

Das entsprechende erfindungsgemäße Verfahren zum Datenbankmanagement umfasst die Schritte:
- Bereitstellung von P-Datenobjekten und B-Datenobjekten in einem Datenspeicherbereich, z.B. in einer Datenbank,
- optional: Zuordnung mindestens jeweils einer Gruppe von B-Datenobjekten zu mindestens jeweils einem Z-Datenobjekt,
wenn mehr als ein P-Datenobjekt und/oder S-Datenobjekt und/oder Z-Datenobjekt ein B-Datenobjekt oder ein Z-Datenobjekt gemeinschaftlich nutzen:
- Erstellung eines S-Datenobjekts, welches für das betreffende übergeordnete P- oder S-Datenobjekt relevante Informationen der gemeinschaftlich genutzten Datenobjekte enthält und
- ggf. erst nach einer entsprechenden Anweisung durch den Benutzer: Einordnung des betreffenden S-Datenobjekts in eine neue (weitere) Hierarchie ("Servicehierarchie"), wobei bevorzugt die Informationen der Children dieses S-Datenobjekts zumindest teilweise in dem S-Datenobjekt enthalten sind und/oder insbesondere eine Zuordnung der von diesem S-Datenobjekt genutzten Datenobjekte als Z-Datenobjekte oder B-Datenobjekte in dieser neuen (weiteren) Servicehierarchie erfolgt,
- Erstellung eines Ausgabe-Datensatzes umfassend mindestens ein B-Datenobjekt, ggf. mindestens ein S-Datenobjekt und ggf. auch ein Z-Datenobjekt, welche einem S-oder P-Datenobjekt untergeordnet sind, wobei in dem Ausgabe-Datensatz S-Datenobjekte als einzige Datenobjekte Informationen zu auf die sie zugreifenden Datenobjekte (Parents) aufweisen, und keine andere Kategorie von Datenobjekten diese Zuordnung von weiteren übergeordneten Datenobjekten (Parents) aufweist.

Der Ausgabe-Datensatz wird dabei unabhängig von dem Ergebnis der Abfrage stets erzeugt. Wenn kein S-Datenobjekt gebildet wurde oder auf andere Weise in den Daten enthalten ist, wird ein Ausgabe-Datensatz ohne S-Datenobjekte ausgegeben.

Das erfindungsgemäße Datenbankmanagementsystem bzw. das erfindungsgemäße Verfahren kann im Grunde mit beliebigen Datenbanken oder auf sonstige Weise abgespeicherten Daten verwendet werden. Besonders gut ist eine Kombination mit einem Datenbanksystem oder einer Datenbank, welche bereits eine entsprechende hierarchische Ordnung von Datenobjekten aufweist, bzw. deren Daten zumindest teilweise hierarchisch vorgeordnet sind oder die entsprechenden hierarchischen Beziehungen zwischen den Datenobjekten bereits bestehen.

Die Datenbank benötigt einen Datenspeicherbereich mit P-Datenobjekten, und B-Datenobjekten. Z-Datenobjekte und S-Datenobjekte können insbesondere ebenfalls enthalten sein, jedoch ist dies für einen grundsätzlichen erfindungsgemäßen Gebrauch des Datenbankmanagementsystems (DBMS) nicht unbedingt notwendig. Auch muss nicht jedes individuelle Datenobjekt stets nur ein einziges Mal in der Datenbank vorhanden sein, sofern Datenobjekte, die sich auf dasselbe reale Element beziehen, diesbezüglich identifizierbar sind. Es ist jedoch zur Reduzierung des Rechenaufwandes von Vorteil, dass jedes individuelle Datenobjekt stets nur ein einziges Mal in der Datenbank vorhanden ist, oder zumindest möglichst wenige Datenobjekte in der Datenbank vorhanden sind, die sich auf dasselbe reale Element beziehen.

Auch wenn es einen geringeren Rechenaufwand bedeutet, wenn das erfindungsgemäße DBMS Zuordnungsinformationen der einzelnen Datenobjekte in den jeweiligen Hierarchien umfasst, muss das DBMS nicht unbedingt zu jedem P-Datenobjekt eine Zuordnung von genutzten Z-Datenobjekten, S-Datenobjekten und/oder B-Datenobjekten umfassen, sofern diese Zuordnungen von dem DMBS von einer anderen Stelle abgerufen werden können. Wenn die betreffenden Zuordnungen bereits bestehen, und wenn diese insbesondere von einem weiteren DBMS verwaltet werden können, ist das erfindungsgemäße DBMS insbesondere so ausgestaltet, dass es die Informationen zur Zuordnung der Datenelemente untereinander von der entsprechenden Stelle, z. B. dem weiteren DBMS, abrufen kann. Es sind jedoch auch andere Ausgestaltungen des DBMS denkbar.

Genauso muss das DBMS nicht unbedingt zu jedem Z-Datenobjekt (sofern vorhanden) eine Zuordnung von genutzten B-Datenobjekten und/oder weiteren Z-Datenobjekten umfassten, sofern diese Zuordnungen von dem DMBS von einer anderen Stelle abgerufen werden können.

Selbstverständlich kann jedoch auch jegliche Stelle mit Zuordnungsinformationen auch als Teil des Datenbankmanagementsystems angesehen werden, selbst wenn es physisch oder virtuell als eigenständiger Teil vorhanden ist, jedoch kann das bevorzugte DBMS ein in sich geschlossenes System darstellen, welches Informationen von anderen Managementsystemen bezieht.

Erfindungsgemäß wird bei einer Abfrage eines Datenobjekts durch einen Benutzer, zumindest eines P- und/oder S-Datenobjekts, vom Datenbankmanagementsystem ein Ausgabe-Datensatz erstellt. Dieser Ausgabe-Datensatz umfasst dabei die betreffende Hierarchie des abgefragten Datenobjekts und kann im Grunde eine beliebige hierarchische Struktur aufweisen. Er enthält vorzugsweise eine Baumstruktur mit einem übergeordneten Datenobjekt, welches in der Regel, insbesondere stets, das abgefragte Datenobjekt ist. Dieses übergeordnete Datenobjekt ist insbesondere ein P- oder S-Datenobjekt, auch wenn grundsätzlich Z- oder B-Datenobjekte ebenfalls gezielt abgefragt werden können, und wird in einer für Datenbanken üblichen Art auch als "Parent" oder "Elternteil" bezeichnet. Diesem Datenobjekt untergeordnete Datenobjekte, welche Z-, B- oder S-Datenobjekte sind, werden in diesem Zuge entsprechend als "Children" oder "Kinder" bezeichnet. Jedem "Child" können ein oder mehrere weitere "Children" untergeordnet sein, also weitere Z-, B- oder S-Datenobjekte. Jedoch können bestimmte Datenobjekte, z. B. besagte S-Datenobjekte der bevorzugten Ausführungsform, auch keine Children aufweisen.

Ein Datenobjekt, insbesondere jedes Datenobjekt, des Ausgabe-Datensatzes umfasst zumindest einen Teil der Informationen des ursprünglichen Datenobjekts in der Datenbank, also insbesondere Daten zur Identifikation, zu Kosten, der Verfügbarkeit und/oder zu betreffen Zuordnungen zu anderen Datenobjekten.

Erfindungsgemäß umfassen in diesem erstellten Ausgabe-Datensatz S-Datenobjekte als einzige Datenobjekte Informationen zu weiteren Parents, insbesondere zu allen Parents, die auf sie zugreifen. Es weist also keine andere Kategorie von Datenobjekten diese Zuordnung von weiteren übergeordneten Patents auf.

Gemäß einer bevorzugten Ausführungsform umfassen in diesem Ausgabe-Datensatz untergeordnete S-Datenobjekte keinerlei Informationen zu Children, also keine Verknüpfungen zu Datenobjekten, die von den betreffenden S-Datenobjekten abhängen. Die von einem untergeordneten S-Datenobjekt genutzten Datenobjekte können in dieser Ausführungsform mittels einer gezielten Abfrage der Hierarchie, z. B. des Verzeichnisbaums, des betreffenden S-Datenobjekts erhalten werden, die darin resultiert, dass für das betreffende S-Datenobjekt von dem Datenbankmanagementsystem ein neuer Datensatz erstellt wird.

Je nach Ausführungsform muss der Datenspeicherbereich weder auf einen einzigen physikalischen Speicher noch auf einen einzigen virtuellen Speicherbereich begrenzt sein. Der Speicherbereich kann auch aus mehreren Segmenten bestehen.

Ein bevorzugtes Datenbanksystem, bzw. eine bevorzugte Datenbank, umfasst ein Datenbankmanagementsystem (DBMS), welches insbesondere das erfindungsgemäße DBMS ist, und einen Datenspeicherbereich mit P-Datenobjekten, S-Datenobjekten und B-Datenobjekten, wobei das Datenbanksystem zusätzlich noch Z-Datenobjekte umfasst, welche eine Zusammenfassung von Gruppen von Datenobjekten betreffen, wobei jedes individuelle Datenobjekt stets nur ein einziges Mal in der Datenbank vorhanden ist und das DBMS
- zu jedem P-Datenobjekt eine Zuordnung von Z-Datenobjekten, S-Datenobjekten und/oder B-Datenobjekten umfasst, welche von dem P-Datenobjekt genutzt werden,
- zu jedem Z-Datenobjekt eine Zuordnung von B-Datenobjekten und/oder weiteren Z-Datenobjekten umfasst, welche von dem diesbezüglichen Z-Datenobjekt genutzt werden,
und wobei zusätzlich das DBMS so ausgestaltet ist,
dass jedem B-Datenobjekt oder Z-Datenobjekt, das von mehr als einem P-Datenobjekt und/oder S-Datenobjekt und/oder Z-Datenobjekt benutzt wird, eine weitere Hierarchie ("Servicehierarchie") zugewiesen wird, in dem das betreffende Datenobjekt als S-Datenobjekt eingeordnet wird und die von diesem S-Datenobjekt genutzten Datenobjekte als Z-Datenobjekte oder B-Datenobjekte in diese weitere Hierarchie ("Servicehierarchie") eingeordnet werden.

Beziehungsweise weist das DBMS Mittel auf, die jedem B-Datenobjekt oder Z-Datenobjekt, das von mehr als einem P-Datenobjekt und/oder S-Datenobjekt und/oder Z-Datenobjekt benutzt wird, eine weitere Hierarchie zuweist, in dem das betreffende Objekt als S-Datenobjekt eingeordnet wird und die von diesem S-Datenobjekt genutzten Datenobjekte als Z-Datenobjekte oder B-Datenobjekte in diese weitere Hierarchie eingeordnet werden.

Sofern ein solches Datenbanksystem kein erfindungsgemäßes DBMS aufweist, stellt es dennoch ein bevorzugtes Datenbanksystem dar, da aus diesem bei einer Verwaltung mittels eines erfindungsgemäßen DBMS mit einem sehr geringen Rechenaufwand die gewünschten Ergebnisse erzielt werden können.

Das Merkmal, dass jedes Datenobjekt stets nur ein einziges Mal in der Datenbank vorhanden sein darf, bezieht sich selbstverständlich nicht auf die Kategorie der Datenobjekte (es gibt in der Regel mehrere P-, S-, Z- und B-Datenobjekte), sondern, dass keine zwei Datenobjekte für ein und dasselbe Element existieren.

Bevorzugt nutzen keine zwei Datenobjekte aus der Z-/B-Kategorie dasselbe Datenobjekt. Insbesondere erfolgt eine gemeinschaftliche Nutzung eines Datenobjekts ausschließlich von S-Datenobjekten und/oder P-Datenobjekten und nicht von Z-Datenobjekten. In diesem Fall würde jedem B-Datenobjekt oder Z-Datenobjekt, das von mehr als einem P-Datenobjekt und/oder S-Datenobjekt benutzt wird, eine weitere Hierarchie zugewiesen, in dem das betreffende Datenobjekt als S-Datenobjekt eingeordnet wird und die von diesem S-Datenobjekt genutzten Datenobjekte als Z-Datenobjekte oder B-Datenobjekte in diese weitere Hierarchie eingeordnet werden, und kein Z-Datenobjekt (und insbesondere auch kein B-Datenobjekt) existieren, welches zusammen mit P-, S- oder Z-Datenobjekten (oder auch anderen B-Datenobjekten) ein Z-, S- oder B-Datenobjekt nutzt.

Ein bevorzugtes Verfahren zur Datenbankorganisation mit einem solchen Datenbanksystem umfasst die Schritte:
- Aufnahme von P-Datenobjekten und B-Datenobjekten in einen Datenspeicherbereich,
- Aufnahme oder Erzeugung von Z-Datenobjekten und S-Datenobjekten in den/dem Datenspeicherbereich,
- Zuordnung mindestens jeweils einer Gruppe von B-Datenobjekten zu mindestens jeweils einem Z-Datenobjekt,
- Zuordnung mindestens jeweils einer Gruppe von B-Datenobjekten und/oder Z-Datenobjekten zu mindestens jeweils einem P-Datenobjekt,
wenn mehr als ein P-Datenobjekt und/oder S-Datenobjekt und/oder Z-Datenobjekt ein B-Datenobjekt oder ein Z-Datenobjekt gemeinschaftlich nutzen:
- Einordnung des gemeinschaftlich genutzten Datenobjekts als S-Datenobjekt in eine neue (weitere) Hierarchie ("Servicehierarchie") und Zuordnung der von diesem S-Datenobjekt genutzten Datenobjekte als Z-Datenobjekte oder B-Datenobjekte in dieser neuen (weiteren) Servicehierarchie,

Bei der Erzeugung einer weiteren Servicehierarchie in dem Ausgabe-Datensatz oder der Datenbank werden Datenobjekte bei der Einordnung in diese S-Hierarchie ggf. in anderen Hierarchien gelöscht bzw. in diese Servicehierarchie direkt verschoben.

Gemäß einer bevorzugten Ausführungsform wird nach der Bildung des neuen S-Datenobjekts mit Zuweisung der betreffenden Datenobjekte in besagte weitere Hierarchie diese weitere Hierarchie bzw. deren Datenobjekte in demjenigen Datenspeicherbereich gebildet, in dem sich bereits die anderen Datenobjekte befinden.

Die neue Servicehierarchie, bzw. deren S-Datenobjekt, in dem Ausgabe-Datensatz oder dem Speicherbereich der Datenbank kann im Grunde eine beliebige hierarchische Struktur aufweisen. Es ist vorteilhaft, wenn die neue Servicehierarchie, bzw. deren S-Datenobjekt besonders gekennzeichnet wird, da dadurch die Benutzung des betreffenden Datenobjekts durch mehrere übergeordnete Datenobjekte hervorgehoben wird, vorzugsweise wird eine solche besondere Kennzeichnung mittels Informationen zu denjenigen Datenobjekten erreicht, die auf das betreffende S-Datenobjekt zugreifen, sie kann aber auch durch andere Kennzeichnungen erfolgen, z. B. durch Marker. Bevorzugt weist kein anderes Datenobjekt als die S-Datenobjekte solche Informationen über Datenobjekte auf, die das betreffende Datenobjekt nutzen, auch wenn es je nach Anwendung von Vorteil sein könnte, dass auch andere Datenobjekte solche Informationen enthalten.

Weiter oben wird davon gesprochen, dass jedem B-Datenobjekt oder Z-Datenobjekt, das von mehr als einem P-Datenobjekt und/oder S-Datenobjekt und/oder Z-Datenobjekt benutzt wird, eine weitere Hierarchie zugewiesen wird, in dem das betreffende Datenobjekt als S-Datenobjekt eingeordnet wird. Zur besseren Verständlichkeit sei bezüglich dieses Aspekts, angemerkt, dass diese Zuweisung der weiteren Hierarchie nicht zwangsläufig mit der Abspeicherung dieser weiteren Hierarchie in demjenigen Datenspeicherbereich, in dem sich die ursprünglichen Datenobjekte befinden, einhergehen muss. Es werden dabei als S-Datenobjekte in dem Datenspeicherbereich diejenigen Datenobjekte bezeichnet, die von mehr als einem Datenobjekt genutzt werden.

Gemäß einer bevorzugten Ausführungsform wird nach der Bildung des neuen S-Datenobjekts mit Zuweisung der betreffenden Datenobjekte in besagte weitere Hierarchie diese Hierarchie bzw. dessen Datenobjekte (ggf. zusätzlich zu einer Abspeicherung in besagtem Datenspeicherbereich) außerhalb dieses Datenspeicherbereichs abgespeichert. Diese Speicherung außerhalb des besagten Datenspeicherbereichs erfolgt in einem Rechner, bevorzugt in demjenigen Rechner, mittels dessen die betreffenden Informationen abgefragt worden sind. Auch hier kann eine besondere Kennzeichnung der Hierarchie bzw. des betreffenden S-Datenobjektes stattfinden. Die Zuweisung der Hierarchie und die Zuordnung der von dem S-Datenobjekt genutzten Datenobjekte als Z-Datenobjekte oder B-Datenobjekte in diese Hierarchie findet bevorzugt erst auf Aktion des Benutzers des Datenbanksystems statt, z. B. eine explizite Abfrage der Hierarchie des S-Datenobjekts, auch wenn im Grunde zunächst der Zeitpunkt auch bei der Bildung des jeweiligen Datenobjekts liegen kann.

Gemäß einer bevorzugten Ausführungsform wird nach der Bildung eines Ausgabe-Datensatzes dieser zusammen mit den Informationen zur hierarchischen Ordnung in einer Datenbank oder einem Speicherbereich abgespeichert wird, sofern diese Hierarchie noch nicht in der betreffenden Datenbank oder dem betreffenden Speicher vorhanden ist.

Es sei kurz angemerkt, dass eine Gruppe wie eine mathematische Menge angesehen werden und theoretisch auch nur ein einziges Datenobjekt enthalten kann. In der Regel weist eine Gruppe jedoch mehrere Datenobjekte auf.

Die durch die mit P-Datenobjekten verknüpften S-Datenobjekte entstehende Struktur kann auch als "Service Matrix" bezeichnet werden. Mittels dieser Matrix kann der Rechenaufwand zur Bearbeitung von Daten und der Berechnung von Ergebnissen auch bei einem sehr komplexen Zusammenhang zwischen den einzelnen Daten erreicht werden. Ein zusätzlicher Vorteil ist, dass auch eine übersichtliche Darstellung der Daten ohne einen großen Rechenaufwand möglich ist. Man erhält somit ein Ergebnis und gleichzeitig eine wohlgeordnete Darstellung des Ergebnisses mit einem minimalen Rechenaufwand.

Auf Basis der Service Matrix kann der Benutzer über Prozesskostenrechnung eine Berechnung der Business Services herleiten und Verfügbarkeiten berechnen.

Insbesondere gelingt es darzustellen, welche Hard- und Software ein IT-Prozess (Produkt) benötigt, woraus sich bei entsprechender Form der Daten die Kosten dieses IT-Prozesses bezüglich z. B. Lizenz, Kauf, Miete und Personal ableiten.

Wie oben bereits angedeutet, nutzen die S-Datenobjekte in den sie nutzenden Produkthierarchien bzw. anderen Servicehierarchien insbesondere keine weiteren Datenobjekte. Diejenigen Datenobjekte, die von einem S-Datenobjekt genutzt werden, sind in diesem Fall in der jeweiligen Servicehierarchie des betreffenden S-Datenobjekts eingeordnet.

Die Datenobjekte umfassen Daten, die zur Identifizierung eines bestimmten Produktes oder Projektes dienen, insbesondere Daten der Gruppe Identifier (wie z. B. Namen, Kennungen, Adressen und Zeichencodes). Des Weiteren umfassen die Datenobjekte Daten zu Größen, die zur Beschreibung des jeweiligen Produkts relevant sind, insbesondere Daten zu den Kosten der jeweiligen Elemente, auf die sich diese Datenobjekte beziehen.

Bevorzugt umfasst ein Datenobjekt zusätzlich Daten zu Aufwendungen für Personal, den Arbeitskräften, welche mit dem Element für dieses Datenobjekt betraut sind und/oder die Verfügbarkeit.

Grundsätzlich ist es von Vorteil, wenn alle Daten enthalten sind, die für eine Prozesskostenrechnung notwendig sind.

Die Bildung von Z-Datenobjekten kann manuell oder automatisch erfolgen. Die Füllung der Kostendaten der Z-Datenobjekte erfolgt insbesondere automatisch, in dem die (ggf. anteilsmäßigen) Kosten (oder anteilsmäßig andere für das jeweilige Produkt relevante Daten) der von dem jeweiligen Z-Datenobjekt genutzten Datenobjekte addiert werden.

Sind mehrere Datenobjekte mit einem anderen Datenobjekt höherer Hierarchiestufe verbunden, so ist in diesem Datenobjekt höherer Hierarchiestufe die Summe der Kosten (oder der für das jeweilige Produkt relevanten Daten), der von diesen Datenobjekt verbundenen Datenobjekte zur Gänze oder anteilsmäßig enthalten.

Anteile kommen dadurch zustande, dass denjenigen Datenobjekten, welche ein S-Datenobjekt nutzen, ein prozentualer Anteil der Kosten (oder anteilsmäßig andere für das jeweilige Produkt relevante Daten) des betreffenden S-Datenobjekts zugeordnet wird. Dieser Anteil berechnet sich insbesondere nach dem Grad der Nutzung des S-Datenobjektes durch die jeweiligen anderen Datenobjekte. Daten zu Kosten sind dabei je nach Anwendung besonders relevant.

Kosten für Personaldienstleistungen, wie z. B. die Erstellung, Wartung und Überwachung von Hard- oder Softwareprodukten oder die Beratung und Schulung zur Bedienung von Hard- oder Softwareprodukten könnte insbesondere in Form von B-Datenobjekten in dem Ausgabe-Datensatz oder in der Datenbank vorliegen.

Es kann jedoch je nach Struktur von Vorteil sein, diese Personaldienstleistungen unabhängig von dem Produkt-, Aggregat- und Basisbereich in die Datenbank aufzunehmen. Dieser neue Bereich wird als "RODEX-Matrix" ("Responsibility in Operational Duties and EXpenditures") bezeichnet.

Gemäß einer bevorzugten Ausführungsform umfasst das Datenbanksystem oder das Datenbankmanagementsystem eine Matrix ("RODEX-Matrix), welche die Zuordnung des Personalaufwandes zu den jeweiligen B-Datenobjekten (und ggf. auch Z-Datenobjekten) pro Zeiteinheit enthält und insbesondere noch eine anteilige Berechnung der Personalkosten und/oder eine Verteilung der Overhead und Linienkosten auf logische Zugehörigkeit (z.B. einer Applikationslandschaft oder Hardwaregruppe) umfasst.

Die besondere Ordnung der Daten, insbesondere, dass ein Elemente der realen Welt jeweils nur eine einzige Entsprechung als Datenobjekt hat, zusammen mit der Einordnung von Datenobjekten, auf das zwei Datenobjekte (die P- und die S-Datenobjekte) zugreifen, erlaubt eine Aufgliederung von sehr komplexen Strukturen in sehr einfache Strukturen. Rechenzeiten, insbesondere bezüglich Kosten, verkürzen sich drastisch, da jedes S-Datenobjekt die relevanten Daten der Elemente, die es nutzt, bereits in sich trägt, und damit ein Zugriff auf diese genutzten Elemente nicht mehr notwendig ist, um ein Ergebnis zu erlangen.

Die Bereiche können eine weitere Unterteilung in Ebenen aufweisen. Der Aggregationsbereich kann dabei insbesondere mit dem Basisbereich überlappen.

Gemäß einer bevorzugten Ausführungsform ist der Produktbereich nicht in weitere Ebenen unterteilt.

Gemäß einer bevorzugten Ausführungsform ist der Aggregationsbereich und/oder der Basisbereich in weitere Ebenen unterteilt. Dabei ist ein bevorzugter Fall, dass beide Bereiche in Ebenen unterteilt sind und insbesondere miteinander überlappen, so dass in einer oberen Ebene des Basisbereichs Aggregate von Datenobjekten einer darunterliegenden Ebene des Basisbereichs enthalten sind, insbesondere neben weiteren B-Datenobjekten.

Ein Beispiel ist ein Basisbereich mit einer untersten Ebene mit B-Datenobjekten zu Hardwareelementen, darüber eine Ebene mit Z-Datenobjekten zu Gruppen dieser Hardwarekomponenten und darüber eine Ebene B-Datenobjekten (und ggf. auch Z-Datenobjekten) mit Applikationen, wobei die beiden oberen Ebenen auch eine gemeinsame Ebene bilden können und/oder die oberste dieser Ebenen auch in zwei Ebenen unterteilt sein kann, wobei insbesondere die oberste dieser beiden die betreffenden Z-Datenobjekte und die untere dieser beiden die betreffenden B-Datenobjekte dieser unterteilten Ebene umfasst.

Darüber kann sich der Aggregationsbereich ohne Überlapp mit dem Basisbereich weiter erstrecken mit einer Ebene, in der Daten zu Gruppen von Applikationen ggf. zusammen mit Hardware zusammengefasst wird oder mehreren Ebenen, in denen jeweils Gruppen von Z-Elementen unterer Ebenen zu weiteren Z-Datenobjekten zusammengefasst werden.

Gemäß einer bevorzugten Ausführungsform sind der Basisbereich und der Aggregationsbereich beide in mindestens drei Ebenen unterteilt, wobei zwischen den untersten beiden Ebenen des Basisbereichs eine Ebene des Aggregationsbereichs liegt und die anderen beiden Ebenen des Aggregationsbereichs über den Ebenen des Basisbereichs liegen.

Die Datenobjekte sind bevorzugt über eine Baumstruktur oder eine Tortenstück-Struktur miteinander verknüpft.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 eine Abhängigkeitsstruktur einer P-Hierarchie.
Figur 2 eine Abhängigkeitsstruktur einer weiteren P-Hierarchie.
Figur 3 eine Abhängigkeitsstruktur einer S-Hierarchie.
Figur 4 eine Abhängigkeitsstruktur bevorzugter P-Hierarchien.
Figur 5 eine Blockdarstellung des grundsätzlichen Verfahrensablaufs.

Die Figuren sind in Form einer Baumstruktur dargestellt, bei denen der Produktbereich mit P-Datenobjekten (P1, P2) bzw. der Servicebereich mit den S-Datenobjekten (S) oben, der Aggregationsbereich mit den Z-Datenobjekten (Z1, Z2, Z3) in der Mitte und der Basisbereich mit den B-Datenobjekten (B) unten dargestellt ist und die Nutzung der Datenobjekte mittels Strichen von oben nach unten kenntlich gemacht ist.

Als Beispiel, welches die Hierarchie beschreiben soll, wird ein Finanzbuchhaltungssystem betrachtet, welches auf verschiedenen lizensierten Softwaremodulen (FI, Legacy, Reporting), sowie auf Datenbanken, und physischen Servern aufbaut und diese Elemente nutzt.

Das Finanzbuchhaltungssystem selber wird erfindungsgemäß durch ein P-Datenobjekt (P1) beschrieben werden. Die einzelnen Softwaremodule FI, Legacy und Reporting, die Datenbanken und die Server würden durch B-Datenobjekte B beschrieben werden. In den Figuren sind die unterschiedlichen B-Datenobjekte der Übersichtlichkeit der Beschreibung halber nur mit "B" bezeichnet.

Software und Hardware würden direkt gemäß ihrer Beziehungen geordnet.

Sinnvolle Zusammenfassungen, zum Beispiel FI und Legacy würden zum Beispiel als Z-Datenobjekt "Accounting" (Z1) beschrieben. Die Kosten der Softwaremodule, z. B. für die Lizenzen, die Wartung oder regelmäßige Updates, wären in den B-Datenobjekten B enthalten und würden als automatisch generierte Summe in dem Z-Datenobjekt Z1 vorliegen.

Die Gesamtheit der Server, die Hardwaregruppen bilden, als die Z-Datenobjekte "FIBU Server" (Z2) und "Reporting Server" (Z3). Die jeweiligen B-Datenobjekte der Server würden also von den betreffenden Z-Datenobjekten (Z2, Z3) genutzt. Entsprechend würden die B-Datenobjekte der Datenbanken auch Z-Datenobjekten zugeordnet werden (nicht dargestellt).

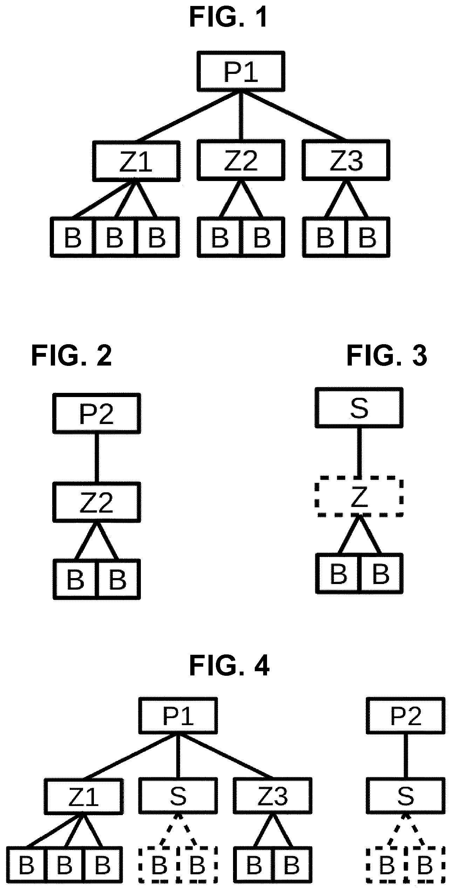

Auch hier wären die Kosten der Hardware, z. B. für Strom, Miete, die Wartung oder regelmäßige Updates, in den B-Datenobjekten enthalten und würden als automatisch generierte Summe in den beiden Z-Datenobjekten vorliegen.
Eine einfache Darstellung der sich ergebenden Struktur (ohne die Datenbaken) ist in Figur 1 dargestellt.

Gäbe es nun z. B. wie in Figur 2 gezeigt ein zweites Produkt neben dem Finanzbuchhaltungssystem, welches die "Reporting Server" nutzen würde, so würde das P-Datenobjekt (P2) dieses neuen Produkts das Z-Datenobjekt "Reporting Server" (Z2) nutzen. Das Z-Datenobjekt "Reporting Server" (Z2) würde somit gemäß der Erfindung als ein S-Datenobjekt (S) in eine (eigene) Servicehierarchie eingeordnet werden (siehe Figur 3). Das S-Datenobjekt (S) könnte auch wieder Z-Datenobjekte enthalten (Z, in Figur 3 gestrichelt), welche die B-Datenobjekte zusammenfassen.

Insbesondere würden auch die betreffenden B-Datenobjekte (B) der Hardwaregruppe der Server in die neue Servicehierarchie unter dem S-Datenobjekt "Reporting Server" (S) eingeordnet werden und in der Hierarchie des P-Datenobjekts "Finanzbuchhaltungssystem" (P1) nicht mehr direkt enthalten sein.

In Figur 4 sind die Abhängigkeiten der beiden P-Datenobjekte (P1, P2) mit dem S-Datenobjekt (S) gezeigt, wobei die betreffenden B-Datenobjekte gestrichelt dargestellt sind, um diese Alternative zu verdeutlichen.

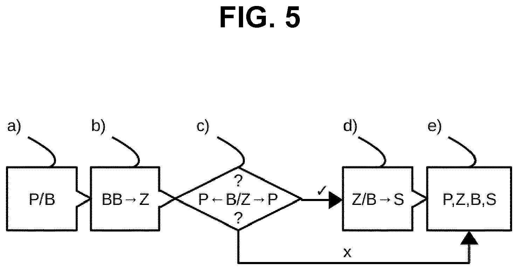

Figur 5 zeigt den grundsätzlichen Ablauf eines bevorzugten Verfahrens zum Datenbankmanagement.

In Schritt a) erfolgt die Bereitstellung von P-Datenobjekten und B-Datenobjekten in einem Datenspeicherbereich. Dies kann z.B. eine Datenbank sein, in der P-Datenobjekte und mit diesen verbundene B-Datenobjekte als Children vorhanden sind.

Schritt b) ist ein optionaler Schritt, bei dem, wenn eine Gruppe von B-Datenobjekten zusammengefasst werden könnte, eine Zuordnung dieser Gruppe von B-Datenobjekten zu einem Z-Datenobjekt erfolgt.

Nun erfolgt in Schritt c) eine Abfrage, ob mehr als ein P-Datenobjekt und/oder S-Datenobjekt und/oder Z-Datenobjekt ein B-Datenobjekt oder ein Z-Datenobjekt gemeinschaftlich nutzen. Für den Fall dass dies verneint wird, wird Schritt d) übersprungen (Pfeil mit der Verneinung (x). Ansonsten wird Schritt d) durchgeführt (Pfeil mit dem Haken).

In Schritt d) erfolgt die Erstellung eines S-Datenobjekts, welches für das betreffende übergeordnete P- oder S-Datenobjekt relevante Informationen der gemeinschaftlich genutzten Datenobjekte enthält. Zudem könnte optional eine Einordnung des betreffenden S-Datenobjekts in eine Servicehierarchie erfolgen, insbesondere zusammen mit einer Zuordnung der von diesem S-Datenobjekt genutzten Datenobjekte als Z-Datenobjekte oder B-Datenobjekte in dieser Servicehierarchie.

In Schritt e) erfolgt die Erstellung eines Ausgabe-Datensatzes umfassend mindestens ein B-Datenobjekt, mindestens ein S-Datenobjekt (bei positivem Ergebnis der vorangegangenen Abfrage) und ggf. auch ein Z-Datenobjekt, welche einem S-oder P-Datenobjekt untergeordnet sind. In diesem Ausgabe-Datensatz weisen S-Datenobjekte als einzige Datenobjekte Informationen zu auf die sie zugreifenden Datenobjekte (Parents) auf, wobei keine andere Kategorie von Datenobjekten diese Zuordnung von weiteren Parents aufweist.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso soll der Begriff "Einheit" auch Komponenten umfassen, die aus mehreren, gegebenenfalls auch räumlich getrennten, Untereinheiten bestehen. Zudem kann mit dem Begriff "Einheit" auch eine gedankliche logische Einheit gemeint sein, so dass ein und dieselbe Hardware-Komponente mehrere dieser logischen Einheiten umfassen kann.

## Patentansprüche

1. Datenbankmanagementsystem (DBMS) zum Management einer Datenmenge umfassend P- und B-Datenobjekte, und optional auch S- und/oder Z-Datenobjekte, wobei das DBMS so ausgestaltet ist, dass jedem B-Datenobjekt oder Z-Datenobjekt, das von mehr als einem P-Datenobjekt und/oder S-Datenobjekt und/oder Z-Datenobjekt benutzt wird bzw. jeder Gruppe von B-Datenobjekten oder Z-Datenobjekten, die sich auf dasselbe Objekt beziehen, und von mehr als einem P-Datenobjekt und/oder S-Datenobjekt und/oder Z-Datenobjekt benutzt wird, ein S-Datenobjekt erstellt wird, welches für das betreffende übergeordnete P- oder S-Datenobjekt relevante Informationen der gemeinschaftlich genutzten Datenobjekte enthält, und
wobei das DBMS zusätzlich so ausgestaltet ist, dass es einen Ausgabe-Datensatz erstellt, in dem S-Datenobjekte als einzige Datenobjekte Informationen zu auf die sie zugreifenden Datenobjekte aufweisen, und keine andere Kategorie von Datenobjekten diese Zuordnung von weiteren übergeordneten Datenobjekten aufweist.

2. Datenbankmanagementsystem nach Anspruch 1, **dadurch gekennzeichnet, dass** esso ausgestaltet ist, dass in einem Ausgabe-Datensatz untergeordnete S-Datenobjekte keinerlei Informationen zu weiteren untergeordneten Datenobjekten umfassen.

3. Datenbankmanagementsystem nach einem der vorangehenden Ansprüche, **dadurch gekennzeichnet, dass** das DBMS zusätzlich dazu ausgelegt ist, insbesondere erst nach einer entsprechenden Anweisung durch den Benutzer, eine Einordnung des betreffenden S-Datenobjekts in eine neue Servicehierarchie vorzunehmen, und insbesondere eine Zuordnung der von diesem S-Datenobjekt genutzten Datenobjekte als Z-Datenobjekte oder B-Datenobjekte in dieser neuen Servicehierarchie durchzuführen.

4. Datenbankmanagementsystem nach einem der vorangehenden Ansprüche, **dadurch gekennzeichnet, dass** das DBMS dazu ausgelegt ist, den Ausgabe-Datensatz in den Speicherbereich einer Datenbank abzuspeichern oder zumindest ein System zu veranlassen, den Ausgabe-Datensatz in der betreffenden Datenbank abzuspeichern.

5. Verfahren zum Datenbankmanagement oder zum Management einer Datenmenge umfassend P- und B-Datenobjekte, und optional auch S- und/oder Z-Datenobjekte, umfassend die Schritte:
- Bereitstellung von P-Datenobjekten und B-Datenobjekten in einem Datenspeicherbereich,
wenn mehr als ein P-Datenobjekt und/oder S-Datenobjekt und/oder Z-Datenobjekt ein B-Datenobjekt oder ein Z-Datenobjekt gemeinschaftlich nutzen:
- Erstellung eines S-Datenobjekts, welches für das betreffende übergeordnete P- oder S-Datenobjekt relevante Informationen der gemeinschaftlich genutzten Datenobjekte enthält und
- Erstellung eines Ausgabe-Datensatzes umfassend mindestens ein B-Datenobjekt, mindestens ein S-Datenobjekt und ggf. auch ein Z-Datenobjekt, welche einem S-oder P-Datenobjekt untergeordnet sind, wobei in dem Ausgabe-Datensatz S-Datenobjekte als einzige Datenobjekte Informationen zu auf die sie zugreifenden Datenobjekte (Parents) aufweisen, und keine andere Kategorie von Datenobjekten diese Zuordnung von weiteren übergeordneten Datenobjekten (Parents) aufweist.

6. Verfahren nach Anspruch 5, **dadurch gekennzeichnet, dass**, insbesondere erst nach einer entsprechenden Anweisung durch den Benutzer, eine Einordnung des betreffenden S-Datenobjekts in eine neue Servicehierarchie erfolgt, und insbesondere eine Zuordnung der von diesem S-Datenobjekt genutzten Datenobjekte als Z-Datenobjekte oder B-Datenobjekte in dieser neuen Servicehierarchie vorgenommen wird.

7. Verfahren nach Anspruch 5 oder 6, **dadurch gekennzeichnet, dass** eine Zuordnung mindestens jeweils einer Gruppe von B-Datenobjekten zu mindestens jeweils einem Z-Datenobjekt vorgenommen wird.

8. Verfahren nach einem der Ansprüche 5 bis 7, **dadurch gekennzeichnet, dass** ein Datenobjekt, insbesondere jedes Datenobjekt, des Ausgabe-Datensatzes zumindest einen Teil der Informationen des ursprünglichen Datenobjekts in der Datenbank umfasst, insbesondere Daten zur Identifikation, zu Kosten, der Verfügbarkeit und/oder zu betreffen Zuordnungen zu anderen Datenobjekten.

9. Verfahren nach einem der Ansprüche 5 bis 8, **dadurch gekennzeichnet, dass** nach der Bildung eines Ausgabe-Datensatzes dieser zusammen mit den Informationen zur hierarchischen Ordnung in einer Datenbank oder einem Speicherbereich abgespeichert wird, sofern diese Hierarchie noch nicht in der betreffenden Datenbank oder dem betreffenden Speicher vorhanden ist.

10. Verfahren nach einem der Ansprüche 5 bis 9, **dadurch gekennzeichnet, dass** das Verfahren mit einem Datenbankmanagementsystem gemäß einem der Ansprüche 1 bis 4 durchgeführt wird.
